# EUROPÄISCHE PATENTANMELDUNG

(11) **EP 1 946 977 A1**
(43) Veröffentlichungstag der Anmeldung: **23.07.2008**
(21) Anmeldenummer: 07122296.2
(22) Anmeldetag: 04.12.2007
(51) Int. Cl.: B60R 21/0134, B60R 21/0136

(54) **Verfahren zur Plausibilisierung eines Unfallereignisses in Fahrzeugen**

(30) Priorität: 18.01.2007 DE 102007002737
(71) Anmelder: ROBERT BOSCH GMBH, 70442 Stuttgart (DE)
(72) Erfinder: Ruhs, Mirko, 64646 Heppenheim (DE); Sohnke, Thorsten, 65835 Liederbach (DE)

(57) **Zusammenfassung**

Die Erfindung betrifft ein Verfahren zur Plausibilisierung eines Unfallereignisses in Fahrzeugen mittels eines Ultraschallsensors zur Auslösung von insbesondere irrereversiblen Rückhaltemitteln. Die Erfindung soll eine Möglichkeit schaffen, die Plausibilisierung der Precrash-Detektion mit einem kürzeren Zeitverzug als aus dem Stand der Technik bekannt ist erreichbar zu machen, indem mittels des selben Ultraschallsensors eine Detektion eines möglichen Aufpralls vor dem Unfallereignis (auch Precrash-Detektion genannt) als auch eine Aufprallerkennung durchgeführt wird.

## Beschreibung

### Stand der Technik

Die Erfindung betrifft ein Verfahren zur Plausibilisierung eines Unfallereignisses in Fahrzeugen mittels eines Ultraschallsensors zur Auslösung von insbesondere irrereversiblen Rückhaltemitteln.

Es ist bekannt, Ultraschallsensoren zur Abstandsmessung in Fahrzeugen einzusetzen. Bevorzugt sind die Ultraschallsensoren dabei als Sende- und Empfangseinheiten für Ultraschall ausgeführt. Ein Ultraschallsignal wird von der Sende- und Empfangseinheit ausgesendet und von einem Hindernis in der Umgebung des Fahrzeugs reflektiert. Das reflektierte Signal wird von der Sende- und Empfangseinheit wieder aufgenommen. Aus der Laufzeit und der Schallgeschwindigkeit wird ein Abstand des Hindernisses zu dem Ultraschallsensor bestimmt. Bevorzugt wird unter Ausnutzung dieses gemessenen Abstands eine Warneinrichtung betrieben, die einen Fahrer eines Fahrzeugs davor warnt, zu nahe an Hindernisse heran zu steuern.

Es sind unterschiedliche Verfahren und Vorrichtungen eines Ultraschallsensors bekannt. Die prinzipielle Arbeitsweise kann wie folgt beschrieben werden. Um die Ultraschallsignale aufnehmen zu können, weist die Ultraschallsende- und Empfangseinheit eine schwingfähige Membran auf, an der ein Piezoelement angeordnet ist. Das Piezoelement dient in einer ersten Betriebsart dazu, die Membran zur Schwingung und damit zur Aussendung von Ultraschallsignalen anzuregen. Ferner werden auch von der Membran aufgenommene Schwingungen an das Piezoelement übertragen, so dass die Schwingungen dazu führen, dass an dem Piezoelement eine den Schwingungen entsprechende Spannung abgegriffen, verstärkt und ausgewertet werden kann, um die Laufzeit des reflektierten Signals zu bestimmen und hieraus den Abstandswert zu erhalten.

Wird der Abstand zwischen Sensor und Objekt von einem System ständig überwacht, ist es möglich, einen Aufprallzeitpunkt im Voraus zu berechnen. Dieses Verfahren wird auch Precrash-Detektion genannt.

Nach DE 10 2004 045 813 A1 ist eine Precrash-Einrichtung dadurch gekennzeichnet, dass ein vorausschauendes Detektieren einer Unfallgefahrensituation nach bestimmten Verfahrensschritten erfolgt, wobei ständig das Umfeld des Kraftfahrzeugs mit der dazu erforderlichen Sensorik überwacht wird, um in Abhängigkeit der sensierten Ereignisse geeignete Rückhaltemittel zu aktivieren. Als Rückhaltemittel sind unter anderem das Auslösen von Airbags, das Schließen von Fenstern, das Ansteuern von Gurtstraffern sowie das Optimieren der Sitzposition und Sitzstellung bekannt. Dabei können die Rückhaltemittel in ihrer Bauart reversibel und irreversibel sein, letzteres ist insbesondere der pyrotechnisch ausgelöste Airbag.

Rückhaltemittel die den Fahrzeuginsassen bei einem Unfallereignis in einer für Leib und Leben vorteilhaften Sitzposition halten, arbeiten in der Regel mit Precrash-Sensoren. Die DE 197 39 655 A1 beschreibt drei wesentliche Funktionsprinzipien für Precrash-Sensoren. Diese bestehen entweder aus optischen Sensoren, Ultraschallsensoren oder Mikrowellensensoren. Diese Sensoren beobachten den Nahbereich um das Fahrzeug herum und erkennen, ob sich der Abstand zwischen dem Fahrzeug und Hindernissen in der Umgebung des Fahrzeugs in der Weise verringert, dass die Gefahr einer Kollision besteht.

Von modernen Rückhaltesystemen wird verlangt, dass der Auslösezeitpunkt mit einer so hohen Genauigkeit berechnet wird, dass eine mehrstufige Auslöseentscheidung ermöglicht wird. Das bedeutet, dass bei einem sehr leichten Aufprall zunächst die Gurtstraffer, bei einem schwereren der Airbag in der ersten und bei einem sehr heftigen Aufprall der Airbag in beiden Stufen gezündet wird. Dies ist mit Geräten, die ausschließlich Beschleunigungssignale auswerten, nur eingeschränkt möglich. Es ist bekannt, dass zusätzlich zu den Beschleunigungssignalen die Aufprallgeschwindigkeit und der Aufprallzeitpunkt bei der Berechnung der Airbagauslösung berücksichtigt werden kann. Da beide vor dem Aufprall ermittelt werden, wird diese Vorrichtung als Precrash-Vorrichtung und der die Auslösung berechnende Algorithmus als Precrash-Algorithmus bezeichnet.

Eine Precrash-Detektion allein ist für eine Ansteuerung der Sicherheitssysteme im Kraftfahrzeug nicht ausreichend. Fehlinterpretationen im fließenden Verkehr sind möglich. Daher ist für die Auslösung der Sicherheitssysteme, insbesondere der irreversiblen und/oder fahrerbeeinflussenden Systeme wie beispielesweise Airbag oder Sitzverstellung, eine Plausibilitätsprüfung notwendig.

Durch die Kenntnis des Aufprallzeitpunktes kann der Algorithmus der Signalauswertung mit der Auswertung der Signale, die bei einer Kollision entstehen, im Moment des Aufpralls beginnen und muss nicht bis zu dem Zeitpunkt warten, wenn die Signale eine bestimmte Rauschschwelle überschreiten.

Üblich nach DE 10 2004 043 597 A1 ist die Detektion des Unfallereignisses durch einen Aufprallsensor. Zur Detektion des Aufpralls können unterschiedliche physikalische Erscheinungen gemessen werden. Neben dem Einsatz von Beschleunigungs-, Druck- oder Verformungssensoren sind auch, wie bereits beschrieben, Ultraschallsensoren zur Aufprallerkennung bekannt.

Ferner ist bekannt, in Fahrzeugen Ultraschallsensoren einzusetzen, die den von einer Deformation einer Karosserie oder von Karosserieteilen des Fahrzeugs erzeugten Schall und die von einer Deformation erzeugten Schwingungen der Karosserieteile erfassen und zu einer Auswerteeinheit übermitteln, um eine Kollision des Fahrzeugs mit einem Hindernis festzustellen. Dabei können die Schwere und der Zeitpunkt der Kollision detektiert werden.

Bei der notwendigen Plausibilitätsprüfung müssen die unterschiedlichen Signale der verschiedenen Sensorsysteme miteinander in Bezug gestellt werden. Hierfür sind aufwändige Rechenoperationen notwendig.

Die Erfindung betrifft eine Möglichkeit, die Plausibilisierung der Precrash-Detektion mit einem kürzeren Zeitverzug als aus dem Stand der Technik bekannt ist zu erreichen.

### Offenbarung der Erfindung

### Vorteile der Erfindung

Das erfindungsgemäße Verfahren zur Plausibilisierung eines Unfallereignisses in Fahrzeugen mittels eines Ultraschallsensors zur Auslösung von insbesondere irrereversiblen Rückhaltemitteln, bei dem mittels desselben Ultraschallsensors eine Detektion eines möglichen Aufpralls vor dem Unfallereignis (auch Precrash-Detektion genannt) als auch eine Aufprallerkennung durchgeführt wird, hat den Vorteil, dass eine sehr schnelle Plausibilitätsprüfung möglich ist und dieser Zeitgewinn die Sicherheit der Kraftfahrzeuginsassen erhöht, insbesondere durch die Möglichkeit träge Rückhaltemittel vor dem Aufprallzeitpunkt zu aktivieren. Durch die Nutzung einzelner Sensoren für mehrere Systeme kann die Anzahl der einzusetzenden Sensoren gegenüber dem Stand der Technik verringert werden, wodurch die Systemkosten sinken. Des Weiteren verringert sich die Komplexität des gesamten Sicherheitssystems, wenn die Auslöseentscheidung für einzelne Schutzmechanismen in dem Ultraschallsystem erfolgt.

Durch die in den abhängigen Ansprüchen aufgeführten Maßnahmen sind vorteilhafte Weiterbildungen und Verbesserungen der im unabhängigen Anspruch angegebenen Erfindung möglich.

Besonders vorteilhaft ist es, wenn mittels einer Auswerteeinheit die Signale einer Precrash-Detektion, die ein Ultraschallsensor aufnimmt, so verarbeitet werden, dass ein Auslösezeitpunkt für die Rückhaltemittel bestimmbar wird. Hierdurch wird erreicht, dass Rückhaltemittel, insbesondere träge Rückhaltemittel, schon vor dem Aufprallzeitpunkt aktiviert werden können.

Von weitergehendem Vorteil ist es, wenn mittels der Auswerteeinheit eine Auslösung der Rückhaltemittel in Abhängigkeit von einer zu erwartenden Aufprallgeschwindigkeit und eines zu erwartenden Aufprallzeitpunktes bestimmbar wird. Hierdurch ist es möglich, einen idealen Auslösezeitpunkt für die Rückhaltemittel auch vor dem Aufprallzeitpunkt festzulegen.

Besonders sinnvoll ist es, wenn eine Precrash-Detektion und Aufprallerkennung mittels eines Ultraschallsensors, der im Heckbereich des Kraftfahrzeuges angeordnet ist, möglich wird. Durch den bereits im Heckbereich vorhandenen Ultraschallsensor zur Distanzmessung, kann ein System, welches durch einen Sensor die Precrash-Detektion und die Aufprallerkennung und somit eine Auslöseentscheidung für irreversible Rückhaltesysteme ermöglicht, kostengünstig realisiert werden. Insbesondere im Heckbereich kann der Ultraschallsensor, trotz der relativ geringen Reichweite im Vergleich zu anderen Abstandssensoren, effektiv und mit hoher Genauigkeit arbeiten, da hier die zu messenden Relativgeschwindigkeiten gering sind und daher die Objekte zum Entscheidungszeitpunkt dichter am Fahrzeug sind.

Es ist weiterhin von Vorteil, dass von der Auswerteeinheit die Signale aus mehreren am Kraftfahrzeug vorgesehenen Ultraschallsensoren berücksichtigt werden. Hierdurch kann die Genauigkeit der Messung erhöht werden und eine Richtung und Position des Aufpralls wird erfassbar.

### Kurze Beschreibung der Zeichnung

Ein Ausführungsbeispiel der Erfindung ist in der Zeichnung dargestellt und in der nachfolgenden Beschreibung näher erläutert.

Die Abbildung zeigt eine schematische Darstellung des zeitlichen Ablaufs einer Heckkollision

### Ausführungsformen der Erfindung

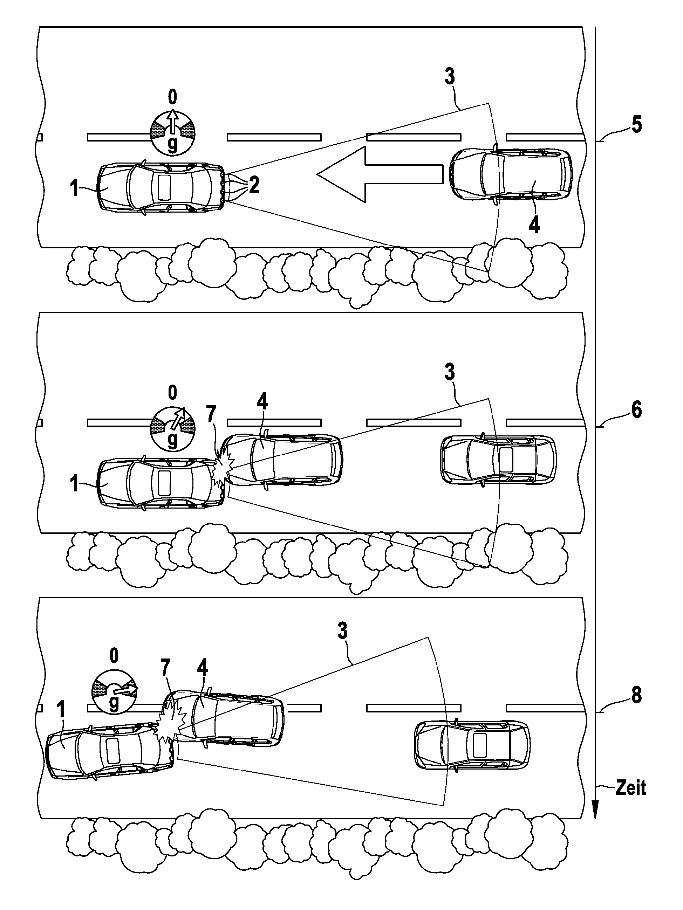

In der Figur 1 ist zur Visualisierung des erfindungsgemäßen Verfahrens ein zeitlicher Ablauf einer Heckkollision dargestellt. Dabei wird mit dem Bezugszeichen 0 die auf die Kollisionspartner wirkende Beschleunigung visualisiert, wobei die Größe der Beschleunigung äquivalent zum Ausschlag des Zeigers nach rechts ist. Die Abbildung zeigt ein Fahrzeug 1 mit einem Precrash-System auf Basis von Ultraschallsensoren 2, die am Heck des Fahrzeugs angeordnet sind und einen Bereich 3 im Umfeld des Fahrzeugs 1 überwachen. Ein weiteres Fahrzeug 4 nähert sich mit hoher Geschwindigkeit von hinten an. Zu dem Zeitpunkt 5 ist der Abstand der beiden Fahrzeuge 1, 4 noch unkritisch. Bei einem geringeren Abstand der Fahrzeuge 1, 4 zueinander kann eine Kollision als unvermeidlich eingestuft werden, wenn das Verhältnis zwischen Abstand und Relativgeschwindigkeit in einem festgelegten Wertebereich liegt. Aus dem mit Hilfe der von Ultraschallsensoren ermittelten Relativgeschwindigkeit und dem Abstand der Fahrzeuge 1, 4 kann die Dauer bis zum Moment 6 des Aufpralls ermittelt werden. Zusätzlich ist es möglich die erfasste Bewegung eines Objektes 4, dass sich dem Fahrzeug 1 nähert, fortzuführen und mit der Änderung des Orts über die Zeit einen Bewegungsvektor zu ermitteln. Aus dem Bewegungsvektor des Objekts 4 und der Relativgeschwindigkeit kann gegebenenfalls ein Aufprallort 7 bestimmt werden. Ist der Zeitraum bis zur Kollision sehr klein, zum Beispiel weniger als einhundert Millisekunden, können unkritische Rückhaltemittel, wie ein reversibler Gurtstraffer, aktiviert werden. Irreversible oder fahrerbeeinflussende Rückhaltesysteme wie Airbag oder Sitzverstellung müssen auf eine Kollisionsbestätigung warten um den Aufprall zu plausibilisieren. Üblicher weise wird der Aufprallzeitpunkt über eine Körperschallmessung plausibilisiert. Da ein Ultraschallsensor wenige Millisekunden nach Kollision den Zeitpunkt des Aufpralls berechnen kann, werden am Fahrzeug 1 zur Detektion des Aufpralls, der Aufprallerkennung dieselben Ultraschallsensoren genutzt, wie zur Pre-crash-Detektion. Zur Plausibilisierung eines Aufpralls werden der Aufprallzeitpunkt aus der Aufprallerkennung und der Aufprallzeitpunkt der Pre-crash-Detektion verglichen. Durch die somit unabhängige Bestätigung des Unfallereignisses können zum Zeitpunkt 8 zusätzliche Rückhaltemittel aktiviert werden. Aus der, von der Precrash-Detektion unmittelbar vor dem Aufprall erfassten Relativgeschwindigkeit kann die mögliche Schwere des Unfalls abgeleitet werden, da die potentielle Energie der kollidierenden Körper von der Relativgeschwindigkeit abhängt. So können unter Anderem ausgewählte Rückhaltemittel in Abhängigkeit von der zu erwartenden Schwere des Unfalls ausgelöst werden, wie Beispielsweise einen Airbag ab einer Relativgeschwindigkeit von mehr als 15 km/h zum Zeitpunkt des Aufpralls.

## Patentansprüche

1. Verfahren zur Plausibilisierung eines Unfallereignisses in Fahrzeugen (1,4) mittels eines Ultraschallsensors (2) zur Auslösung von insbesondere irrereversiblen Rückhaltemitteln **dadurch gekennzeichnet, dass** mittels desselben Ultraschallsensors (2) eine Detektion eines möglichen Aufpralls vor dem Unfallereignis als auch eine Aufprallerkennung durchgeführt wird.

2. Verfahren nach Anspruch 1, **dadurch gekennzeichnet, dass** mittels einer Auswerteeinheit die Signale einer Precrash-Detektion, die ein Ultraschallsensor (2) aufnimmt, zur Bestimmung eines Auslösezeitpunktes für die Rückhaltemittel verarbeitet werden.

3. Verfahren nach Anspruch 1 oder 2, **dadurch gekennzeichnet, dass** mittels der Auswerteeinheit eine Auslösung der Rückhaltemittel in Abhängigkeit von einer zu erwartenden Aufprallgeschwindigkeit und eines zu erwartenden Aufprallzeitpunktes bestimmt wird.

4. Verfahren nach mindestens einem der vorhergehenden Ansprüche, **dadurch gekennzeichnet, dass** eine Precrash-Detektion und Aufprallerkennung mittels eines Ultraschallsensors (2), der im Heckbereich des Kraftfahrzeuges (1) angeordnet ist, möglich wird.

5. Verfahren nach mindestens einem der vorhergehenden Ansprüche, **dadurch gekennzeichnet, dass** von der Auswerteeinheit die Signale aus mehreren am Kraftfahrzeug (1) vorgesehenen Ultraschallsensoren 2 berücksichtigt werden.
